# EUROPÄISCHE PATENTSCHRIFT

(11) **EP 1 134 633 B1**
(45) Veröffentlichungstag und Bekanntmachung des Hinweises auf die Patenterteilung: **20.10.2004**
(21) Anmeldenummer: 01103904.7
(22) Anmeldetag: 17.02.2001
(51) Int. Cl.: G05B 19/05, G05B 19/042, H02J 1/08

(54) **Vorrichtung zur Ansteuerung einer Last**
Device for the control of a load
Dispositif pour la commande d'une charge

(30) Priorität: 16.03.2000 DE 10012721
(43) Veröffentlichungstag der Anmeldung: 19.09.2001
(73) Patentinhaber: ROBERT BOSCH GMBH, 70442 Stuttgart (DE)
(72) Erfinder: Schweigert, Gerhard, 64293 Darmstadt (DE); Giere, Dirk, 71679 Asperg (DE); Rug, Volker, 64720 Michelstadt (DE)
(74) Vertreter: Thürer, Andreas

(56) Entgegenhaltungen:
- EP-B- 0 323 579
- DE-A- 19 609 009
- DE-U- 29 702 815
- GB-A- 2 285 713
- US-A- 1 713 181

## Beschreibung

### Stand der Technik

Die Erfindung geht aus von einer dezentralen Ein-/Ausgangsbaugruppe für elektronische Steuerungen zur Ansteuerung von Lasten nach der Gattung des unabhängigen Anspruchs 1. Aus der EP 323 579 B1 ist bereits eine dezentrale Ein/Ausgabebaugruppe für elektronische Steuerungen bekannt, die über eine Busleitung zur Übertragung von Ein-/Ausgangssignalen mit einer elektronischen Steuerung verbunden und räumlich getrennt von dieser angeordnet ist. Es sind ein oder mehrere steckbare Ein-/Ausgangsmodule mit gleich- oder verschiedenartig aufgebauten Ein-/Ausgangsstufen vorgesehen. Ein Steckverteilerkasten weist einen Steckanschluss für die Busleitung, mehrere Steckanschlüsse für Ein-/Ausgangsmodule und einen den Austausch von Signalen zwischen der Steuerung und den Ein-/Ausgangsstufen sowie deren Verteilung steuernden Logikbaustein auf. Der Steckverteilerkasten und die Ein/Ausgangsmodule einschliesslich aller Steckverbindungen sind staub- und/oder wasserdicht ausgebildet.

Die Ausgänge dieser Ein-/Ausgangseinheiten werden von einer Lastversorgung mit Energie versorgt. In einigen Fällen, in denen sicherheitsrelevant abgeschaltet werden muß, wird die Lastversorgung über einen Notausschalter geführt, um im Störfall die Ausgänge stromfrei zu schalten. Bei einfachen Ein-/Ausgangseinheiten sind alle Ausgänge im Bezug auf die Lastversorgung auf ein gemeinsames Potential geführt. Die Ausgänge der Ein-/Ausgangseinheiten können also nur an einer Lastspannung (Vor- oder Nachnotaus) angeschlossen sein. Werden in einer Anlage jedoch dauernde (Vornotaus) und sicherheitsrelevante (Nachnotaus) Ausgänge benötigt, erzwingt dies den Einsatz von mehreren Ein-/Ausgabeeinheiten. Durch die doppelte Lagerhaltung und teilweise ungenutzte Ausgänge kann dies zu erheblichen Mehrkosten bezüglich der Gesamtanlage führen.

Es ist daher Aufgabe der Erfindung, eine flexible Anpassung einer Ein-/Ausgangseinheit einer elektronischen Steuerung für unterschiedliche Einsatzmöglichkeiten vorzusehen. Die Aufgabe wird durch die Merkmale des unabhängigen Anspruchs gelöst.

### Vorteile der Erfindung

Der dezentralen Ein-/Ausgangsbaugruppe sind ein erstes Lastversorgungssignal und ein zweites Lastversorgungssignal zugeführt zur Versorgung einer Last einer Ausgangsgruppe. Erfindungsgemäß sind Umschaltmittel vorgesehen, die entweder das erste oder das zweite Lastversorgungssignal zur Versorgung einer Last weiterleiten. Durch eine Integration eines Umschaltmittels in der Ein-Ausgangseinheit können mit einer einzigen Baugruppe zwei unterschiedlich laststromrelevante Anwendungsfälle abgedeckt werden. Werden in einer Anlage dauernde (Vornotaus) und sicherheitsrelevante (Nachnotaus) Ausgänge benötigt, erfolgt eine entsprechende Voreinstellung mithilfe der Umschaltmittel. Für unterschiedliche laststromrelevante Anwendungen müssen nun nicht mehr zwei Ein-/Ausgangsbaugruppen, gegebenenfalls unterschiedlich verdrahtet, vorgesehen werden. Bevorzugt eignet sich die Vorrichtung zur Ansteuerung von Ventilbaugruppen, die mechanisch mit der Ein-/Ausgangsbaugruppe verbunden sind. Der Rückgriff auf lediglich eine einzige Baugruppe trägt nicht zuletzt zur Reduzierung des Platzbedarfs bei und erhöht die Flexibilität.

Es sind Einstellmittel zur Beeinflussung des Umschaltmittels vorgesehen. Über das Einstellmittel kann der Benutzer auswählen, welche der beiden Lastversorgungen zur Ansteuerung einer Last zur Verfügung stehen soll. Bei den beiden Lastversorgungen handelt es sich vorzugsweise um eine Vornotaus-Lastversorgung und um eine Nachnotaus-Lastversorgung. Bei sicherheitsrelevanten Ausgängen betätigt der Benutzer die Einstellmittel in der Weise, daß die Nachnotaus-Lastversorgung als Ansteuerung für die Last weitergeleitet wird. Die Einstellmittel erlauben eine einfache Parametrierung und tragen zur Erhöhung der Flexibilität bei, da bei sich ändernden sicherheitsrelevanten Anwendungen lediglich die Einstellmittel entsprechend betätigt werden müssen. Die Beeinflussung der Umschaltmittel könnte im Fall von nicht sicherheitsrelevanten Ausgängen auch elektronisch erfolgen. Eine entsprechende Parametrierung könnte beispielsweise im Anwenderprogramm einer speicherprogrammierbaren Steuerung erfolgen. Der Benutzer müßte dann die Einstellmittel nicht mehr selbst mechanisch betätigen.

In einer zweckmäßigen Weiterbildung umfasst die dezentrale Ein-/Ausgangsbaugruppe eine Schnittstelle zum Datenaustausch mit einer übergeordneten Steuerung. Die Vorrichtung eignet sich in Verbindung mit der seriell oder parallel ausgeführten Schnittstelle insbesondere für den Datenaustausch mit einer speicherprogrammierbaren Steuerung. Über die Schnittstelle könnten auch Steuersignale zur Beeinflussung der Umschaltmittel eingelesen werden.

Weitere zweckmäßige Weiterbildungen ergeben sich aus weiteren abhängigen Ansprüchen und aus der Beschreibung.

### Zeichnung

Ausführungsbeispiele der dezentralen Ein-/Ausgangsbaugruppe für elektronische Steuerungen zur Ansteuerung von Lasten sind in der Zeichnung dargestellt und werden im folgenden näher beschrieben.

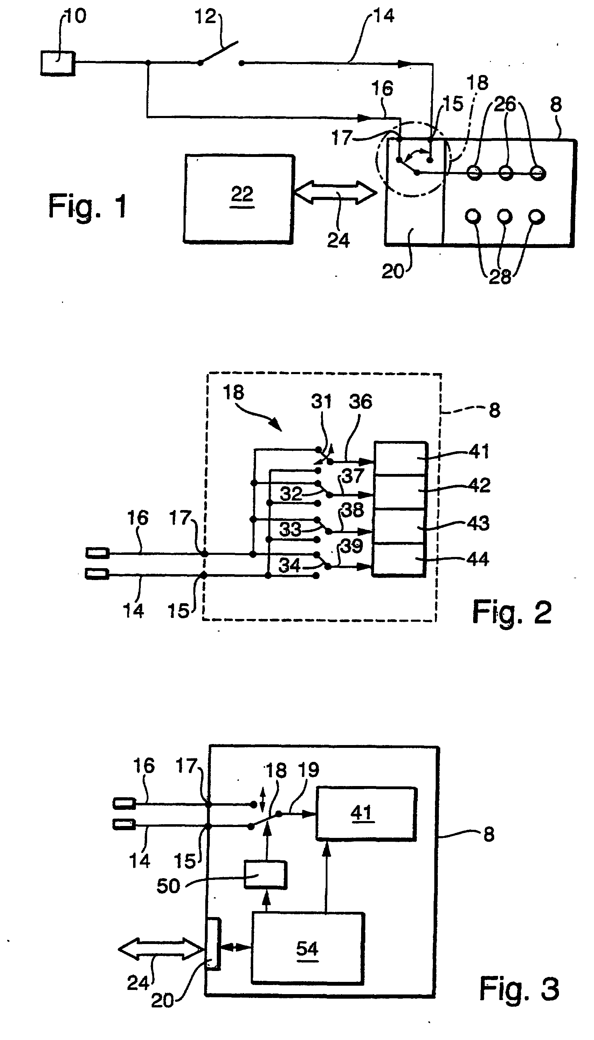

Es zeigen die Figuren 1 bis 3 Blockschaltbilder der Ausführungsbeispiele.

### Beschreibung der Ausführungsbeispiele

Der Ausgang einer Lastversorgungsbereitstellung 10 gelangt über ein Notausschaltmittel 12 als Nachnotaus-Lastversorgung 14 an einen ersten Lastversorgungs-Eingang 15. Der nicht über das Notausschaltmittel 12 geleitete Ausgang der Lastversorgungsbereitstellung 10 wird als Vornotaus-Lastversorgung 16 einem zweiten Lastversorgungs-Eingang 17 einer Baugruppe 8 zugeführt. Die Baugruppe 8 umfaßt Umschaltmittel 18, die je nach Schalterstellung entweder die Nachnotaus-Lastversorgung 14 oder die Vornotaus-Lastversorgung 16 an zumindest einen Ausgang 26 weiterleiten. Der Vollständigkeit halber sind noch weitere Eingänge 28 der Baugruppe 8 gezeigt. In der Baugruppe 8 ist zudem eine Schnittstelle 20 vorgesehen zum Anschluß zumindest einer Datenleitung 24 zur Kommunikation vorzugsweise mit einer speicherprogrammierbaren Steuerung 22. Über diese Datenleitung 24 gelangen die eigentlichen Ein-/Ausgangssignale an die Baugruppe 8. Bei dem Ausführungsbeispiel gemäß Figur 1 handelt es sich bei der Datenleitung um eine solche eines Bussystems 24.

Bei dem Ausführungsbeispiel gemäß Figur 2 ist das Umschaltmittel 18 näher gezeigt. Wiederum gelangen die Nachnotaus-Lastversorgung 14 über den ersten Lastversorgungs-Eingang 15 und die Vornotaus-Lastversorgung 16 über den zweiten Lastversorgungs-Eingang 17 an vier parallel zueinander verschaltete Schaltmittel 31 bis 34, die je nach Schalterstellung entweder die Nachnotaus-Lastversorgung 14 oder die Vornotaus-Lastversorgung 16 über die Schalter 35 bis 39 an die jeweiligen Ausgangsgruppen 41 bis 44 weiterleiten. Im dargestellten Zustand leiten die vier Schaltmittel 31 bis 34 die Vornotaus-Lastversorgung 16 an die Ausgangsgruppen 41 bis 44 weiter. Als Ausgangsgruppen 41 bis 44 sind vorzugsweise Ventile verwendet.

Bei dem Ausführungsbeispiel gemäß Figur 3 umfasst die Baugruppe 8 neben dem ersten Lastversorgungs-Eingang 15 die Nachnotaus-Lastversorgung 14, dem zweiten Lastversorgungs-Eingang 17 die Vornotaus-Lastversorgung 16 und dem Umschaltmittel 18 auch Einstellmittel 50, die die Schalterstellung des Umschaltmittels 18 beeinflussen. Das Ausgangssignal des Umschaltmittels 18 gelangt als Lastversorgung 19 an die Ausgangsgruppe 41. Die Steuerung 54 ist ebenfalls in der Baugruppe 8 angeordnet und zum Zwecke des Ein-/Ausgangs-Datenaustausches über die Schnittstelle 20 mit dem Bussystem 24 und der daran angeschlossenen speicherprogrammierbaren Steuerung 22 verbunden. Das Ausgangssignal des Steuermittels 54 dient der ersten Ausgangsgruppe 41 als Ansteuersignal.

Die Lastversorgungsbereitstellung 10 stellt die Spannungsversorgung der Ausgangsgruppen 41 bis 44 als elektrische Verbraucher sicher. Die Ausgangsgruppen 41 bis 44 können entweder über die Nachnotaus-Lastversorgung 14 oder die Vornotaus-Lastversorgung 16 versorgt werden. Als Nachnotaus- bzw. Vornotaus-Lastversorgung 14, 16 ist beispielsweise ein 24V-Versorgungsspannungssignal zur Energieversorgung einer elektrischen Last 41 bis 44 vorgesehen. Die entsprechenden Nachnotaus- bzw. Vornotaus-Versorgungsspannungen werden von der Lastversorgungsbereitstellung 10 erzeugt und nachfolgend als Nachnotaus- bzw. Vornotaus-Lastversorgung 14, 16 bezeichnet. Sicherheitsrelevante Ausgänge 26 werden über die Nachnotaus-Lastversorgung 14 bestromt. Im Normalbetrieb ist das Notausschaltmittel 12 geschlossen, so daß die Spannungsversorgung der Ausgangsgruppen 41 bis 44 durch die Nachnotaus-Lastversorgung 14 sichergestellt ist. Bei Betätigung des Notausschaltmittels 12 im Sinne eines Öffnens (Notaus) werden die durch die Nachnotaus-Lastversorgung 14 versorgten Ausgangsgruppen 41 bis 44 im Störfall gezielt abgeschaltet.

Nicht sicherheitsrelevante Ausgänge 26 werden durch die Vornotaus-Lastversorgung 16 unabhängig davon elektrisch beaufschlagt, ob das Notausschaltmittel 12 betätigt wurde oder nicht. Diese dauernd mit Spannung versorgten Ausgänge 26 sind somit nicht durch das Notausschaltmittel 12 beeinflußbar.

Die Baugruppe 8 weist nun einen ersten Lastversorgungs-Eingang 15 und einen zweiten Lastversorgungs-Eingang 17 auf. Über den ersten Lastversorgungs-Eingang 15 wird das von der Lastversorgungsbereitstellung 10 bereitgestellte Versorgungssignal über das Notausschaltmittel 12 als Nachnotaus-Lastversorgung 14 zugeführt. Über den zweiten Lastversorgungs-Eingang 17 gelangt die Vornotaus-Lastversorgung 16 in die Baugruppe 8. Über das Umschaltmittel 18 wird entweder die Nachnotaus-Lastversorgung 14 oder die Vornotaus-Lastversorgung 16 an die Ausgangsgruppe 26 durchgeschleift. Bei der in Figur 1 dargestellten Schalterstellung des Umschaltmittels 18 werden die Ausgänge 26 durch die Vornotaus-Lastversorgung 16 versorgt. Die über diese Ausgänge 26 angesteuerten Ausgangsgruppen werden somit auch dann mit Spannung versorgt, wenn das Notausschaltmittel 12 im Sinne eines Notbetriebs betätigt wurde. Damit werden nicht sicherheitsrelevante Ausgangsgruppen weiterhin angesteuert.

Sollen jedoch die Ausgänge 26 sicherheitsrelevante Ausgangsgruppen mit Energie versorgen, so muß das Umschaltmittel 18 im Sinne eines Umschaltens betätigt werden. In der in Figur 1 nicht dargestellten Schalterstellung würden dann die Ausgänge 26 mit der Nachnotaus-Lastversorgung 14 versorgt werden.

Bei der Baugruppe 8 handelt es sich um eine dezentrale Ein-/Ausgangsbaugruppe, die räumlich entfernt von der speicherprogrammierbaren Steuerung 22 angeordnet ist. Die speicherprogrammierbare Steuerung 22 erzeugt die entsprechenden Steuerbefehle für die Ausgänge 26, ob der entsprechende Ausgang 26 zu aktivieren oder zu deaktivieren ist. Diese Steuerbefehle gelangen über das Bussystem 24 und die Schnittstelle 20 an die Baugruppe 8. Außerdem sind in der Baugruppe 8 Eingänge 28 vorgesehen zur Erfassung bestimmter Eingangsgrößen wie Rückmeldesignale, Endschalterstellungen etc. zur Weiterleitung an die speicherprogrammierbare Steuerung 22.

Das Ausführungsbeispiel gemäß Figur 2 zeigt beispielhaft die Ausgestaltung des Umschaltmittels 18. Es werden vier Ausgangsgruppen 41 bis 44 über die Baugruppe 8 entweder mit der Nachnotaus-Lastversorgung 14 oder mit der Vornotaus-Lastversorgung 16 angesteuert. Hierzu sind die vier Schaltmittel 31 bis 34 parallel verschaltet. Je nach Schalterstellung der Schaltmittel 31 bis 34 leiten sie entweder die Vornotaus-Lastversorgung 16 oder die Nachnotaus-Lastversorgung 14 als Ansteuersignale 36 bis 39 an die Ausgangsgruppen 41 bis 44 weiter. Bei den Ausgangsgruppen handelt es sich vorzugsweise um Ventile. Die Baugruppe 8 dient für diese Ventile auch als mechanische Befestigungsaufnahme. Je nach der Sicherheitsrelevanz der jeweiligen Ventilanwendung werden die Ventile entweder mit der Vornotaus-Lastversorgung 16 oder mit der Nachnotaus-Lastversorgung 14 mit Energie versorgt. Der Benutzer muß hierzu die Umschaltmittel 31 bis 34 in die entsprechende Schalterstellung bringen, beispielsweise über Schiebeschalter.

Bei dem Ausführungsbeispiel gemäß Figur 3 sind Möglichkeiten aufgezeigt, wie das der Ausgangsgruppe 41 zugeführte Versorgungssignal 14, 16 beeinflußt werden kann. Wiederum leiten die Umschaltmittel 18 entweder die Nachnotaus-Lastversorgung 14 oder die Vornotaus-Lastversorgung 16 zur Ansteuerung weiter. Außerdem sind nun Einstellmittel 50 vorgesehen, über die die Schalterstellung des Umschaltmittels 18 beeinflußt werden kann. Bei dem Einstellmittel 50 könnte es sich beispielsweise um Schiebeschalter handeln, die in der Baugruppe 8 integriert sind und für den Benutzer von Außen zugänglich sind. Die Einstellung erfolgt hierbei rein mechanisch. Soll die Ausgangsgruppe 41 bei einer späteren Anwendung anstelle mit der Nachnotaus-Lastversorgung 14 mit der Vornotaus-Lastversorgung 16 versorgt werden, so muß der Benutzer das Einstellmittel 50 so betätigen, daß die Schalterstellung des Umschaltmittels 18 verändert wird.

In einer alternativen Ausführung könnte das Einstellmittel 50 auch von der Steuerung 54 betätigt werden. Hierbei könnte der Benutzer beispielsweise in der speicherprogrammierbaren Steuerung 22 für jeden Ausgang 26 beziehungsweise jede Ausgangsgruppe 41 bis 44 definieren, ob sie über die erste Lastversorgung 14 oder über die zweite Lastversorgung 16 versorgt werden soll. Die im Anwenderprogramm der speicherprogrammierten Steuerung 22 hinterlegte entsprechende ausgangsabhängige Einstellinformation gelangt über das Bussystem 24 und die Schnittstelle 20 an die Steuerung 54. Diese erkennt, ob die Ausgangsgruppe 41 über eine erste Lastversorgung 14 oder über eine zweite Lastversorgung 16 versorgt werden soll. Die Steuerung 54 steuert das Einstellmittel 50 somit in der Weise an, daß das Umschaltmittel 18 wie in Figur 3 dargestellt geschaltet ist.

Die speicherprogrammierbare Steuerung 22 erzeugt für jeden Ausgang 26 beziehungsweise Ausgangsgruppe 41 bis 44 ein entsprechendes Steuersignal bezüglich dessen/deren Aktivierung oder Deaktivierung. Diese Steuersignale gelangen über das Bussystem 24 und die Schnittstelle 20 an die Steuerung 54, die diese Signale entsprechend umsetzt. Sendet die speicherprogrammierbare Steuerung 22 über das Bussystem 24 und die Schnittstelle 20 ein Deaktivierungssignal an die Steuerung 54, leitet diese das Deaktivierungssignal an die Ausgangsgruppe 41 weiter, die daraufhin die Energieversorgung/Aktivierung der Ausgangsguppe 41 unterbindet.

Die speicherprogrammierbare Steuerung 22 kann auch in unmittelbarer Nähe zu der Baugruppe 8 angeordnet sein. Über die Schnittstelle können seriell oder parallel entsprechende Steuersignale zugeführt werden.

In den Ausführungsbeispielen wurden unterschiedliche Lastversorgungsmöglichkeiten am Beispiel einer Nachnotaus- und Vornotaus-Lastversorgung beschrieben. Die Erfindung läßt sich überall dort anwenden, wo eine Last alternativ je nach Anwendungsfall entweder über ein erstes Lastversorgungssignal oder über ein zweites Lastversorgungssignal mit vorzugsweise elektrischer Energie versorgt wird. Die beiden zuführbaren und durch das Schaltmittel auswählbaren Lastversorgungssignale können sich hinsichtlich der Sicherheitsrelevanz, der Qualität der Versorgungssignale (z.B. Spannungsstabiltität) etc. unterscheiden. Die zumindest zwei Lastversorgungen könnten auch von unterschiedlichen Lastversorgungsbereitstellungen unabhängig voneinander erzeugt werden.

## Patentansprüche

1. Dezentrale Ein-/Ausgangsbaugruppe (8) für elektronische Steuerungen zur Ansteuerung von Lasten (41 bis 44) **dadurch gekennzeichnet, daß** die dezentrale Ein-/Ausgangsbaugruppe einen ersten Eingang (15), über welchen ein erstes Lastversorgungssignal (14) zuführbar ist, zumindest einen zweiten Eingang (17), über welchen ein zweites Lastversorgungssignal (16) zuführbar ist, sowie über Einstellmittel (5) beeinflussbare Umschaltmittel (18,31 bis 34), die für jede Last wählbar entweder das erste Lastversorgungssignal (14) oder das zweite Lastversorgungssignal (16) zur Lastversorgung von wenigstens zwei Lasten (41 bis 44) mit elektrischen Energie weiterleiten, umfaßt.

2. Vorrichtung nach Anspruch 1, **dadurch gekennzeichnet, daß** die Einstellmittel (50) die Umschaltmittel (18, 31 - 34) mechanisch und/oder elektrisch betätigen.

3. Vorrichtung nach einem der vorhergehenden Ansprüche, **dadurch gekennzeichnet, daß** als erstes Lastversorgungssignal (14) ein Nachnotaus-Lastversorgungssignal und/oder als zweites Lastversorgungssignal (16) ein Vornotaus-Lastversorgungssignal verwendet ist.

4. Vorrichtung nach einem der vorhergehenden Ansprüche, **dadurch gekennzeichnet, daß** als Last (41 - 44) zumindest ein Ventil vorgesehen ist.

5. Vorrichtung nach einem der vorhergehenden Ansprüche, **dadurch gekennzeichnet, daß** sie Befestigungsmittel zur Befestigung der Last (41 - 44) umfaßt.

6. Vorrichtung nach einem der vorhergehenden Ansprüche, **dadurch gekennzeichnet, daß** eine Schnittstelle (20) vorgesehen ist zur Erfassung zumindest eines Steuersignals.

7. Vorrichtung nach Anspruch 6, **dadurch gekennzeichnet, daß** Steuermittel (54) vorgesehen sind zur Beeinflussung der Lastversorgung (19) in Abhängigkeit von dem Steuersignal.

8. Vorrichtung nach Anspruch 6 oder 7, **dadurch gekennzeichnet, daß** das Steuersignal von einer speicherprogrammierbaren Steuerung (22) gebildet wird.

9. Vorrichtung nach einem der vorhergehenden Ansprüche, **dadurch gekennzeichnet, daß** sie zumindest einen Ausgang (26) umfaßt, an dem das von den Umschaltmitteln (18, 31 - 34) weitergeleitete Lastversorgungssignal (19, 36 - 39) abgreifbar ist.

## Claims

1. Local input/output module (8) for electronic controllers for the actuation of loads (41-44), **characterized by** the fact that the local input/output module has a first input (15) through which a first load supply signal (14) can be carried, at least a second input (17) through which a second load supply signal (16) can be carried, and switching devices (18, 31-34) which can be influenced by setting devices (50) and which for each load carry, according to choice, either the first load supply signal (14) or the second load supply signal (16) to supply power to at least two loads (41-44).

2. Device according to claim 1, **characterized by** the fact that setting devices (50) operate the switching devices (18, 31-34) by mechanical and/or electrical means.

3. Device according to one of the foregoing claims, **characterized by** the fact that a post-emergency-off-load supply signal is used as the first load supply signal (14) and/or a pre-emergency-offload supply signal is used as the second load supply signal (16).

4. Device according to one of the foregoing claims, **characterized by** the fact that at least one valve is provided as a load (41-44).

5. Device according to one of the foregoing claims, **characterized by** the fact that it includes fastenings for fixing the load (41-44).

6. Device according to one of the foregoing claims, **characterized by** the fact that an interface (20) is provided for detecting at least one control signal.

7. Device according to claim 6, **characterized by** the fact that controllers (54) are provided for influencing the load supply (19) depending on the control signal.

8. Device according to claim 6 or 7, **characterized by** the fact that the control signal is formed by a programmable controller (22).

9. Device according to one of the foregoing claims, **characterized by** the fact that it has at least one output (26) from which the load supply signal (19, 36-39) routed by the switching devices (18, 31-34) can be tapped.

## Revendications

1. Composant d'entrée/sortie décentralisé (8) pour des commandes électroniques destinées à commander des charges (41 à 44), **caractérisé en ce que** le composant d'entrée/sortie décentralisé comprend une première entrée (15) par laquelle un premier signal d'alimentation de charge (14) peut être introduit, au moins une deuxième entrée (17) par laquelle un deuxième signal d'alimentation de charge (16) peut être introduit, ainsi que des moyens de commutation (18,31 à 34) influençables par l'intermédiaire de moyens de réglage (5) et qui transmettent, au choix pour chaque charge, le premier signal d'alimentation de charge (14) ou le deuxième signal d'alimentation de charge (16) afin d'alimenter en énergie électrique au moins deux charges (41 à 44).

2. Dispositif selon la revendication 1, **caractérisé en ce que** les moyens de réglage (50) actionnent les moyens de commutation (18, 31-34) mécaniquement et/ou électriquement.

3. Dispositif selon l'une des revendications précédentes, **caractérisé en ce qu'**on utilise comme premier signal d'alimentation de charge (14) un signal d'alimentation de charge après arrêt d'urgence et/ou comme deuxième signal d'alimentation de charge (16) un signal d'alimentation de charge avant arrêt d'urgence.

4. Dispositif selon l'une des revendications précédentes, **caractérisé en ce que**, comme charge (41 - 44), il est prévu au moins une vanne.

5. Dispositif selon l'une des revendications précédentes, **caractérisé en ce qu'**il comprend des moyens de fixation pour la fixation de la charge (41-44).

6. Dispositif selon l'une des revendications précédentes, **caractérisé en ce qu'**une interface (20) est prévue pour relever au moins un signal de commande.

7. Dispositif selon la revendication 6, **caractérisé en ce que** des moyens de commande sont prévus pour influencer l'alimentation de charge (19) en fonction du signal de commande.

8. Dispositif selon la revendication 6, **caractérisé en ce que** le signal de commande est formé par une commande (22) à mémoire programmable.

9. Dispositif selon l'une des revendications précédentes, **caractérisé en ce qu'**il comprend au moins une sortie (26) sur laquelle peut être pris le signal d'alimentation de charge (19, 36-39) transmis par les moyens de commutation (18, 31-34).
